# EUROPEAN PATENT APPLICATION

(11) **EP 4 445 742 A1**
(43) Date of publication of application: **16.10.2024**
(21) Application number: 24169636.8
(22) Date of filing: 11.04.2024
(51) Int. Cl.: A23G 9/04, A23G 9/22, A23G 9/16, A23G 9/28, A23G 9/52, F25B 49/02, A23L 2/54

(54) **FILL LOGIC FOR FROZEN CARBONATED BEVERAGE MACHINE**

(30) Priority: 11.04.2023 US 202363495408 P; 08.04.2024 US 202418629012
(71) Applicant: Marmon Foodservice Technologies, Inc., Osseo, MN 55369 (US)
(72) Inventor: Greenberg, Jacob, Osseo, 55369 (US)
(74) Representative: Slingsby Partners LLP

(57) **Abstract**

A frozen beverage dispensing machine (100) includes a barrel (122). A liquid side (132) of an expansion tank (134) is connected to the barrel (122). A gas side (136) of the expansion tank (134) is separated from the liquid side (132) by a bladder (138). A controller (400) is configured to receive liquid pressure measurements from a liquid pressure transducer (152) and is configured to initiate a fill process to provide a flow of liquid through the liquid side of the expansion tank (134) into the barrel (122) in response to the liquid pressure measurements falling below a liquid cut in pressure value. The controller (400) is configured to initiate a gas pressure adjustment process when the liquid pressure measurements are less than a target gas side pressure.

## Description

### CROSS-REFERENCE TO RELATED APPLICATIONS

The present application claims priority of U.S. Provisional Patent Application No. 63/495,408, filed on April 11, 2023.

### FIELD OF THE DISCLOSURE

The present disclosure relates to frozen beverage dispensing machines. More specifically, the present disclosure relates to a pressurized subsystem for frozen carbonated beverage systems.

### BACKGROUND

U.S. Patent No. 6,220,047 discloses a dual-purpose carbonator/blending bottle is connected to a source of beverage syrup, a source of potable water and to a source of pressurized carbon dioxide gas. The dual-purpose bottle is retained within an ice bank water bath tank. A pair of ratio valves provide for metering the water and syrup at a desired ratio. A refrigeration system provides for cooling an evaporator located in the water tank for forming the ice bank thereon. The carbonated beverage then flows from the bottle into a freeze cylinder. A scraping mechanism within the cylinder provides for scraping frozen beverage from the inner surface of the cylinder. A control mechanism provides for controlling the refrigeration system and the cooling of both evaporators.

U.S. Patent No. 11,154,074 discloses a refrigeration subsystem removably received within a base machine to cool an object. The subsystem includes a body with an opening that receives the object. An evaporator thermally communicates with the object, which is cooled by refrigerant flowing through the evaporator. A compressor receives the refrigerant downstream of the evaporator and increases a refrigerant pressure. A condenser receives the refrigerant downstream of the compressor, which cools the refrigerant. An expansion device receives the refrigerant downstream of the condenser and decreases its pressure, the evaporator being downstream from the expansion device. A refrigerant circuit fluidly couples the evaporator, compressor, condenser, and expansion device such that the refrigerant flows therebetween, all of which are coupled to the body and move together therewith. The refrigerant circuit forms a closed loop that remains unbroken when the body of the refrigerant subsystem is removed from the base machine.

### BRIEF DISCLOSURE

An example of a frozen beverage dispensing machine includes a barrel. An expansion tank includes a gas side separated from a liquid side by a bladder. The liquid side is fluidly connected to the barrel. A gas pressure transducer is operably connected to the gas side of the expansion tank. A liquid pressure transducer is operably connected to the liquid side of the expansion tank. A controller is configured to receive liquid pressure measurements from the liquid pressure transducer. The controller is configured to initiate a fill process to provide a flow of liquid through the liquid side of the expansion tank into the barrel in response to the liquid pressure measurements falling below a liquid cut in pressure value. The controller is configured to initiate a gas pressure adjustment process when the liquid pressure measurements are less than a target gas side pressure.

Additional examples of the frozen beverage dispensing machine include a valve connected between the gas side of the expansion tank and a gas source. In the gas pressure adjustment process if a gas pressure measured at the gas pressure transducer is less than the target gas side pressure, the valve is opened until the gas pressure measured at the gas pressure transducer equals the target gas side pressure. A vent valve may be connected to the gas side of the expansion tank. In the gas pressure adjustment process if a gas pressure measured at the gas pressure transducer is greater than the target gas side pressure the vent valve is opened until the gas pressure measured at the gas pressure transducer equals the target gas side pressure. The controller may be configured to execute the gas pressure adjustment process after the liquid pressure measurement falls below the target gas side pressure. In the gas pressure adjustment process the controller compares the gas pressure measurement to the target gas side pressure and operates to add or vent gas pressure from the gas side of the expansion tank until the gas pressure measurement equals the target gas side pressure. The gas pressure adjustment process may be a calibration routine and the target gas side pressure is the same as a previous target gas side pressure.

The controller may be configured to execute the gas pressure adjustment process after the liquid pressure measurements fall below the target gas side pressure by a predetermined amount. The controller may be configured to receive a user input of the target gas side pressure, and the controller further delays initiation of the gas pressure adjustment process until after the liquid pressure measurements fall below the target gas side pressure. In response to receiving the user input of the target gas side pressure, the controller operates to suspend the fill process until the gas pressure adjustment process is completed. The target gas side pressure may be a target gas side pressure range. The controller may be configured to determine an operational mode of the frozen beverage machine and based upon the determined operational mode, determine the liquid cut in pressure and a liquid cut out pressure. The liquid cut in pressure and the liquid cut out pressure are lower values if the operational mode is a defrost mode than if the operational mode is a freeze mode.

An example of a method of frozen beverage machine filling includes measuring a gas pressure at a gas side of an expansion tank. A liquid pressure is measured at a liquid side of the expansion tank. The gas side of the expansion tank is separated from the liquid side of the expansion tank by a bladder. A controller compares the measured liquid pressure to a target gas side pressure. A gas pressure adjustment process is initiated when the liquid pressure measurements are less than a target gas side pressure.

In further examples of frozen beverage machine filling, the target gas side pressure is received. Barrel filling operations are suspended until the gas pressure adjustment process is complete. A valve connected between the gas side of the expansion tank and a gas source is opened if the gas pressure measured at the gas side of the expansion tank is less than the target gas side pressure. A vent valve is connected to the gas side of the expansion tank if the gas pressure measured at the gas side of the expansion tank is greater than the target gas side pressure.

A further method of frozen beverage machine filling includes determining an operational mode of the frozen beverage machine. Based upon the operational mode, a cut in pressure and a cut out pressure are determined. A liquid pressure within the frozen beverage machine is measured. The liquid pressure is compared to the cut in pressure and the cut out pressure. An action of the frozen beverage machine is determined based upon the comparison.

In further examples of the method of frozen beverage machine filling, determining the cut in pressure and the cut out pressure includes obtaining the cut in pressure and/or the cut out pressure from a look up table. Determining the cut in pressure and the cut out pressure includes calculating the cut in pressure and/or the cut out pressure. At least one valve is opened to fill a barrel of the frozen beverage machine if the liquid pressure is below the cut in value. At least one valve is closed to stop filling of the barrel of the frozen beverage machine if the liquid pressure is above the cut out value. A current valve operation is maintained if the liquid pressure is between the cut in value and the cut out value. An overrun value is received and a lookup table having overrun values, cut in pressure values, and cut out pressure values is referenced. A cut in pressure value and a cut out pressure value are selected based upon the determined operational mode and the overrun value. The overrun value may be a user set value.

### BRIEF DESCRIPTION OF THE DRAWINGS

Examples are described with reference to the following drawing figures. The same numbers are used throughout to reference like features and components.

The drawings illustrate embodiments for carrying out the disclosure. The same numbers are used throughout the drawings to reference like features and like components. In the drawings:
FIG. 1 is a sectional side view of a frozen carbonated beverage system.
FIG. 2 is a schematic view of exemplary portions of a frozen carbonated beverage system.
FIG. 3 is a flow chart that depicts an exemplary method of filling a frozen carbonated beverage system.
FIG. 4 depicts an exemplary control system for operating a frozen carbonated beverage system.
FIG. 5 is a flow chart that depicts an exemplary method of adjusting the fill pressure in a frozen carbonated beverage system.
FIGS. 6A-C are graphs depicting operational expansion tank pressures.
FIG. 7 is a flow chart that depicts an exemplary method of adjusting a target pressure differential in an expansion tank.
FIG. 8 is a schematic of an alternative expansion tank system.

### DETAILED DESCRIPTION OF THE DRAWINGS

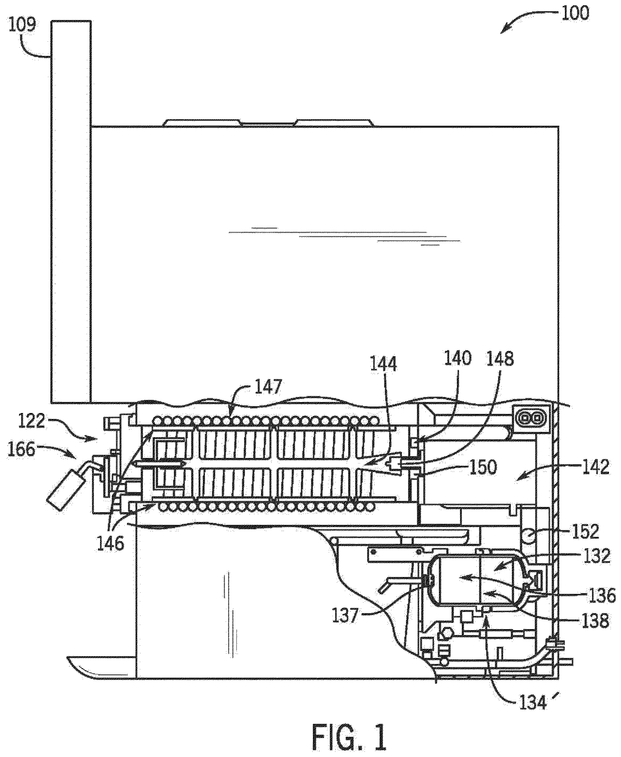

The present disclosure generally relates to systems and methods for dispensing frozen carbonated beverages (FCBs), such as may be offered at a food or beverage service provider, a convenience store, or the like. Figs. 1-2 show an example of a FCB dispensing machine 100, which prepares and stores a beverage within a barrel 122 until the beverage is dispensed via a dispense valve 166. In certain embodiments, selections for the beverage to be dispensed are made using a user interface 109.

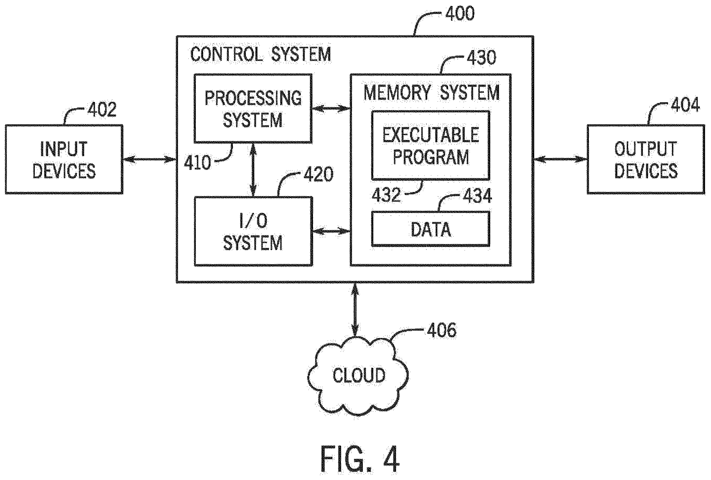

The barrel 122 receives a combined beverage mixture of water, syrup, and CO2 as will be explained herein through a barrel inlet 140. A refrigeration coil 147 surrounds the barrel 122 and is operable to chill the barrel 122 and the contents therein to a temperature sufficient to freeze the combined beverage within the barrel. A motor 142 rotates a beater bar 144 and scraper blades 146 attached thereto. The scraper blades 146 run along an inside surface of the barrel 122 to scrape frozen beverage from the barrel wall. In dispensing machines 100 known in the art, the beater bar 144 is rotated at a fixed speed (e.g., 168 RPM). The motor 142 is coupled to the beater bar 144 via a motor coupling shaft 148 that passes through a rotary barrel seal 150. An expansion tank 134 is also provided between supply lines and a barrel inlet 140 defined within the barrel 122. The expansion tank 134 includes a liquid side 132 and a gas side 136 which are separated via a flexible internal diaphragm 138 such that the dispensing machine 100 can be pressurized via adjustment of the gas side 136 pressure. The liquid side 132 is fluidly coupled to the barrel 122 such that liquid side 132 pressure is a measurement of the barrel 122 pressure. A pressure transducer 152 in this beverage supply line measures this pressure. The power required for the motor 142 to rotate the beater bar 144 and the scraper blades 146 through the beverage contained within the barrel 122 is monitored by a control system 400 (FIG. 4, discussed below) having a processing system 410 and memory system 430. This power consumption is then used to estimate the viscosity of beverage within the barrel 122.

The dispensing machine 100 includes a beverage production system 101. In the beverage production system 101, pressurized water 102, syrup concentrate 104, and CO₂ 106 (collectively, supply lines) are supplied to the dispensing machine 100. Pressures are monitored by "sold out" pressure transducers 108 connected to each of the supply lines. The pressure of the water 102 entering the dispensing machine 100 is controlled by reducing the pressure through a regulator 110, then increasing the pressure with a CO₂ powered pump 112 to yield a consistent and known final pressure. The pressure provided by this CO₂ powered pump 112 is a function of inlet CO₂ pressure.

In a similar manner, pressure for the syrup concentrate 104 is supplied by a CO₂ powered pump (not shown), whereby pressure is again provided as a function of inlet CO₂ pressure as controlled by a regulator. The resulting pressure of syrup concentrate 104 at the dispensing machine 100 is a function of the pressure provided by the CO₂ powered pump, the distance in elevation between the pump and the dispensing machine 100, tubing diameters for the supply lines, syrup concentrate 104 viscosity, the number of splices or joints in the supply lines, and other factors.

FIG. 4 depicts an exemplary control system or controller 400 for operating a dispensing machine 100 according to the present disclosure. The control system or controller 400 communicates with input devices 402 (which may include but are not limited to pressure transducers 108, 119, and 152), output devices 404 (such as the water valves 124), and/or a cloud 406 based network. In the exemplary control system 400 shown, an input/output (I/O) system 420 provides communication between the control system 400 and the input devices 402, output devices 404, and cloud 406, which may each be bidirectional in nature. A processing system 410 within the control system 400 is configured to execute information received from the I/O system 420 and also from the memory system 430. In the example shown, the memory system 430 includes an executable program 432 for operating the control system 400, as well as a data 434 module for storing such parameters as cut in and cut off pressures, as discussed above.

In examples, the processing system 410 may be implemented using any suitable hardware processor or combination of processors, such as a central processing unit (CPU), a graphics processing unit (GPU), an accelerated processing unit (APU), a microcontroller, an application specific integrated circuit (ASIC), a field-programmable gate array (FPGA), etc. The memory system 430 can include any suitable volatile memory, non-volatile memory, storage, or any suitable combination thereof. Non-transitory tangible computer readable medium are nonvolatile memory, magnetic storage, and optical storage. The control system 400 exemplarily includes other sensors, including pressure sensors, current sensors, temperature sensors, or receives signal from such sensors to carry out the FCB machine operations as described herein.

It should be recognized that certain aspects of the present disclosure are described and depicted, including within FIG. 4, in terms of functional and/or logical block components and various processing steps. It should be recognized that any such functional and/or block components and processing steps may be realized by any number of hardware, software, and/or firmware components configured to perform the specified functions. For example, certain embodiments employ various integrated circuit components, such as memory elements, digital signal processing elements, logic elements, look-up tables, or the like, which are configured to carry out a variety of functions under the control of one or more processors or other control devices. The connections between functional and logical block components are also merely exemplary. Moreover, the present disclosure anticipates communication among and between such components being wired, wireless, and through different pathways.

These functions may also include the use of computer programs that include processor-executable instructions, which may be stored on a non-transitory tangible computer readable medium. The computer programs may also include stored data. Non-limiting examples of the non-transitory tangible computer readable medium are nonvolatile memory, magnetic storage, and optical storage. As used herein, the term module may refer to, be part of, or include an application-specific integrated circuit (ASIC), an electronic circuit, a combinational logic circuit, a field programmable gate array (FPGA), a processor system (shared, dedicated, or group) that executes code, or other suitable components that provide the described functionality, or a combination of some or all of the above, such as in a system-on-chip. The term module may include memory (shared, dedicated, or group) that stores code executed by the processor. The term code, as used herein, may include software, firmware, and/or microcode, and may refer to programs, routines, functions, classes, and/or objects. The term shared, as used above, means that some or all code from multiple modules may be executed using a single (shared) processor. In addition, some or all code to be executed by multiple different processors as a computer system may be stored by a single (shared) memory. The term group, as used above, means that some or all code comprising part of a single module may be executed using a group of processors. Likewise, some or all code comprising a single module may be stored using a group of memories as a memory system.

Furthermore, certain elements are shown as singular devices for the sake of clarity but may be combined or subdivided differently to perform the same function. For example, the processing system 410 may represent a single microprocessor, or a group of microprocessors functioning as a system. This also applies to the input/output (I/O) system 420 and memory system 430, which may also store information therein in greater or fewer groupings than is shown.

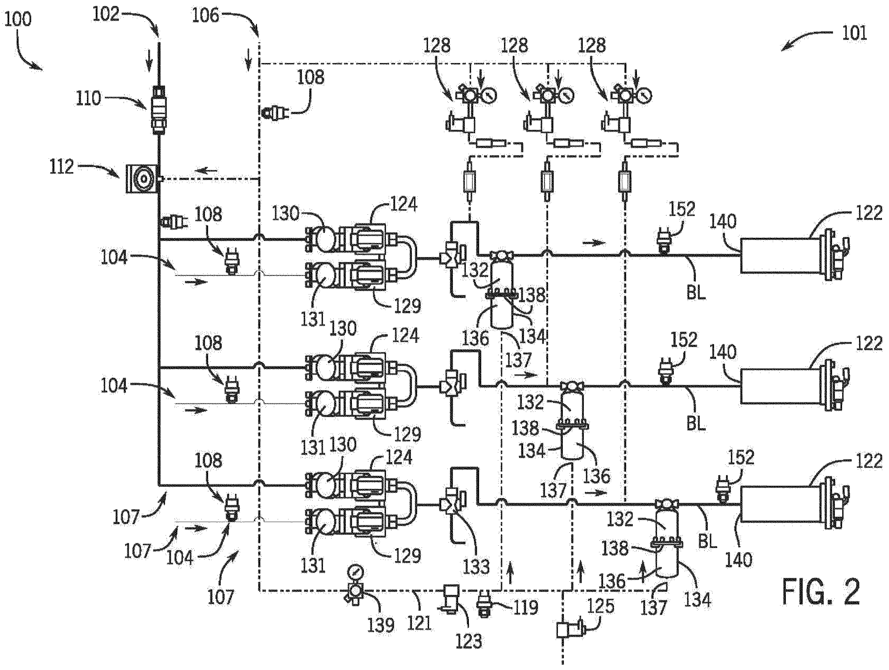

Referring to Fig. 2, the pressure of incoming CO₂ 106 is controlled by a regulator 139, which for dispensing machines 100 is exemplarily set at 75 psig. Supply pressures may drop for multiple reasons. Since all supply lines may incorporate the use of CO₂ as described above (i.e., via CO₂ powered pumps 112), a reduction in CO₂ supply pressure can affect all supply lines. This can occur when the contents of the CO₂ tank are depleted, when there is an increased draw on a tank providing the supply of CO₂ 106 from other dispensing machine 100 or other devices sharing common sources of CO₂ 106, or an increased draw from a single dispensing machine 100, such as if multiple barrels 122 are filled simultaneously as part of a standard maintenance activity, for example. Additional information about beverage production and refrigeration systems in FCB dispensing machines 100 is also provided in U.S. Patent No. 6,220,047.

When one of the supply lines is depleted, the pressure of that supply line will drop below a "cut in" pressure as read by pressure transducers 108. A control system 400 (FIG. 4) receives input from the pressure transducers 108 and compares these pressure values to "cut in" and "cut off" values. If the pressure is below the cut in pressure, the control system 400 determines that the supply is "sold out." The control system 400 then signals the need for the supply to be replenished until the supply pressure is determined to be above a cut off pressure as read by the pressure transducer 108. When the control system 400 determines that the pressure of the supply line has surpassed the cut off pressure, the control system will no longer indicate that the supply line is "sold out."

The water 102, syrup concentrate 104, and CO₂ 106 pass through the liquid side 132 of the expansion tank 134. The expansion tank 134 is typically pressurized on the gas side 136 at a pressure which is typically equal to or greater than the pressure of the liquid side 132. Pressure sensor 119 measures exemplarily measures the pressure of the gas side 136 downstream of pressure regulator 139. Fill valve 123 is operable to add gas pressure from gas source 106 (through pressure regulator 139) to the gas side 136. Vent valve 125 is operable to relieve gas pressure from the gas side 136. As discussed above, ice crystals form and expand in the barrel 122, thus increasing the liquid side pressure and causing movement of the internal diaphragm 138 until the liquid side pressure and the gas side pressure reach an equilibrium through the diaphragm 138. Liquid product is then delivered via beverage lines BL to enter the barrel 122 through a barrel inlet 140 (Fig. 1).

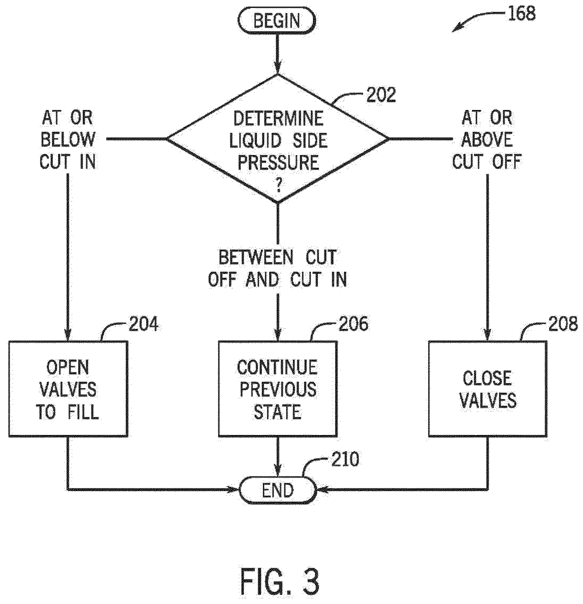

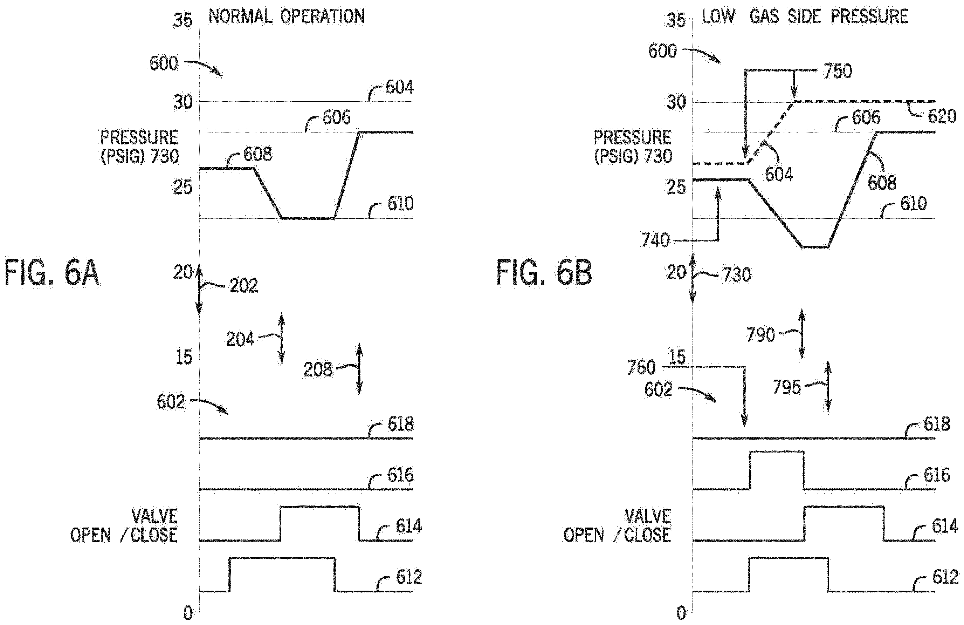

Figure 3 presents an example of a fill process 168 for the beverage production system 101. The control system 400 exemplarily performs at least some of the fill process 168. Fig. 6A provides an example graph 600 and valve state diagram 602 of the fill process 168. The graph 600 of Fig. 6A presents gas side pressure 604 (e.g. 30 psi, as measured by pressure transducer 119), the liquid cut off pressure 604 (e.g. 28 psi), the liquid side pressure 608 (e.g. 26 psi, as measured by pressure transducer 152), and liquid cut in pressure (e.g. 23 psi). The valve state diagram 602 presents the valve state (e.g. open = high) for the dispense valve (166) at line 612 and for product fill valve (124, 129, 128) at line 614. In step 202, the control system 400 determines the pressure on the liquid side 132 of the expansion tank 134, which is also the same as the pressure in the barrel 122 via inputs received from the pressure transducer 152. The control system 400 then compares the liquid side pressure 608 to the beverage cut in (valve open) pressure 610 and the beverage cut off (valve closed) pressure 606. Opening of the dispense valve 166 to dispense the beverage to a customer (at 620) generally reduces the liquid side pressure 608. If the control system 400 determines that the liquid side pressure 608 is at or below the cut in pressure 610, then at 204 the control system 400 signals for the barrel 122 to be filled. To fill the barrel 122, the water valves 124, syrup valves 129, and CO₂ valves 128 are opened to allow water, syrup concentrate, and CO₂ to simultaneously flow into the barrel 122 together (see FIG. 2). The water 102 and syrup concentrate 104 are generally kept at a consistent ratio, set by manually adjusting water flow controls 130 and syrup concentrate flow controls 131. Depending on the required amount of CO₂, the CO₂ valve 128 may open fully when the water valves 124 and syrup valves 129 are opened, or may open intermittently, such as via a specified duty cycle.

The state of the fill process 168 continues in step 206 (whether filling or not filling) as long as the barrel 122 pressure is between the cut in and cut off values. That is, if the barrel has been filled, and the valves are closed, the process does not open the valves to fill until the liquid side pressure 608 is at or below the cut in pressure 610, while if the valves are open, filling the barrel, the valves remain open until the pressure reaches the cut off pressure 606. If the pressure in the barrel 122 is determined to be at or above the cut off value in step 208, the water valves 124, syrup valves 129, and CO2 valves 128 are all closed to stop the fill process 168 in step 210.

A similar control process occurs to control refrigeration in the FCB dispensing machine 100. As described in U.S. Patent No. 11,154,074, the viscosity of contents in the barrel 122 is used to determine whether the beverage therein requires more, less, or the same refrigeration at any given time. The viscosity is determined based on the power required to rotate the motor 142. The control system 400 (Fig. 4) then determines whether the viscosity falls below a stall value, exemplarily based on comparison to a table stored within the data 434 of the memory system 430. If the viscosity is found to be greater than the stall value, the motor 142 is stopped and a defrost process is started to melt the excessive ice causing the excessive viscosity within the barrel 122.

Upon activation of the defrost process, heat is added to the barrel 122 through a barrel evaporator for a set duration, or until the temperature of an evaporator outlet reaches a specified temperature. In certain examples, the intention of this defrost process is to fully melt all product in the barrel 122. From there, the barrel again chilled as described above in a refrigeration process until the viscosity of the product meets a specified cut out value.

The present inventors have identified that FCB dispensing systems presently known in the art are prone to several types of problems regarding the defrost process operating in conjunction with the fill process. For example, during a defrost process, as the frozen beverage in the barrel melts, the beverage condenses, lowering the liquid side pressure in the barrel 122. The liquid side 132 pressure drops below the "cut in" pressure, which in turn triggers filling of the barrel 122 with more beverage product. Once the defrost process is complete, and the refrigeration process begins, the product in the barrel 122 expands as it freezes, resulting in excess product and a higher liquid side pressure than when it entered the refrigeration cycle. One solution is to disable the fill process altogether during the defrost process to prevent the aforementioned problem. However, in the event that a user-enabled dispense occurs during the defrost process, without backfilling the dispensed beverage, the pressure in the barrel 122 can be reduced to 0 psig, and then further reduced as the product continues to melt. This reduction below 0 psig can create a vacuum in the barrel 122, causing stress or possibly damage to sealing components.

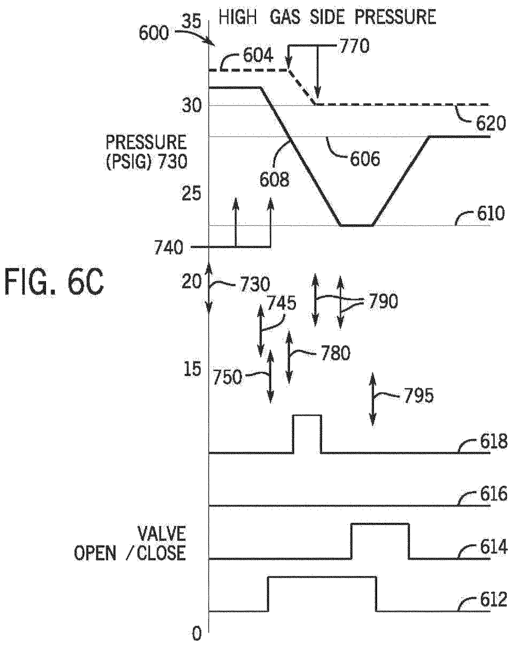

The present disclosure relates to improvements to the fill process logic with respect to a coinciding defrost process. The control system 400 of the present disclosure stores adjusted parameters such as "defrost cut in" and "defrost cut off' pressures within the data module 434 of the memory system 430. With reference to Figs. 3 and 6, during normal operation, the cut in pressure, which triggers a filling of the barrel 122 at step 204 is typically between 23 and 28 psig. As disclosed herein, the control system 400 additionally considers an operational mode or state of the FCB dispensing machine and selects between sets of values for cut in and cut off pressures based upon the operational mode or state. During defrost, the cut in pressure is reduced, for example, to between 3 and 5 psig, such that the control system 400 avoids filling the barrel unless there is a risk of the barrel 122 pressure dropping below 0 psig. When a defrost process is initiated, the control system 400 considers the operational mode and sets corresponding values for the cut in and cut out pressures. The control system 400 determines a liquid side pressure , then compares the liquid side pressure to the defrost cut in and cut off values. The state of the fill process proceeds as described using the adjusted defrost cut in and cut off values. The defrost process is completed, triggering the refrigeration process until the desired viscosity of the product is achieved and the cut in and cut off values are reset to the regular operation values.

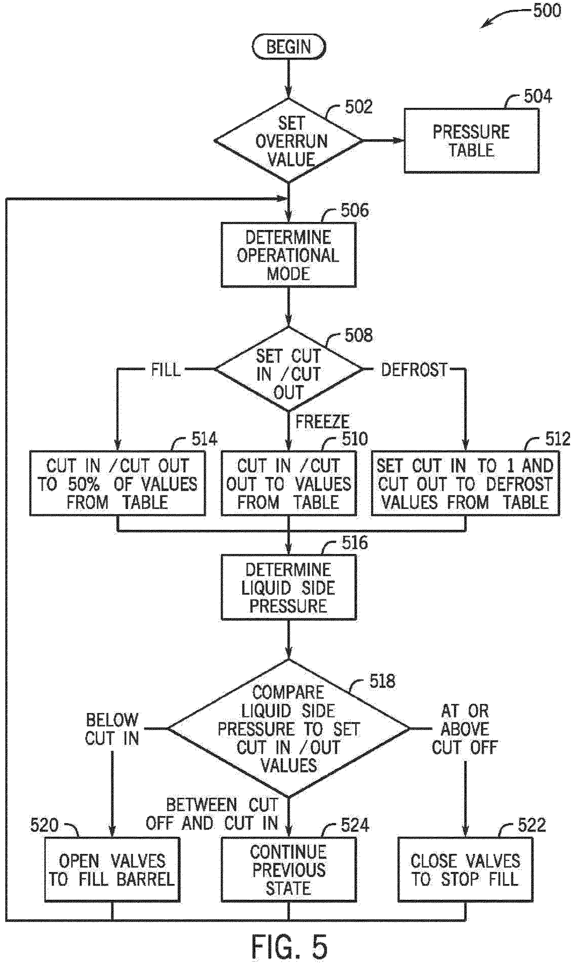

Figure 5 is a flow chart that depicts an example of the above process 500 of filling control adjustment dependent upon operational mode, for example a defrost cycle. In an example, the process further includes an optional feature of an overrun setting value. At 502, an overrun setting is optionally established. The overrun setting value represents the increase in volume achieved between the liquid beverage product and the frozen carbonated beverage product and is generally a function of CO₂ pressure in the barrel at the time of a dispense. It will be recognized that the overrun setting may result in different beverage compositions and mouthfeel. Therefore, the overrun setting may be set in a specification by the beverage manufacturer or the retail establishment. The overrun setting value may be pre-set or may be a user set variable. The overrun setting values and associated cut in and cut out values may be stored in a table or database 504, for example as data 434 in the memory system 430 (Fig. 4). The table provided below, provides an example of various cut in and cut out pressure setpoints dependent upon the current overrun setting, including for example a line for no specified overrun setting, with the exemplary cut in and cut out values described above. From the table below, cut in pressure may non-limitingly be between 19-23psi and the cut out pressure is higher than the cut in pressure and may non-limitingly be between 24-28psi. The defrost cut in may exemplarily be between 1-3 psi while the defrost cut out is higher than the defrost cut in pressure and may exemplarily be between 3-10psi. In the example of a low (e.g. 10%) overrun, it is recognized that the cut in and cut out pressures may be substantially reduced, while the defrost cut in and cut out values are further reduced from these lowered cut in/out pressures.

| OVERRUN SETTING | CUT IN | CUT OUT | DEFROST CUT IN | DEFROST CUT OUT |
|---|---|---|---|---|
| N/A | 23 | 28 | 3 | 5 |
| 10% | 3 | 5 | 1 | 3 |
| 50% | 19 | 24 | 1 | 7 |
| 100% | 23 | 28 | 1 | 10 |

Next, a current operational mode of the FCB dispensing machine is determined at 506. In one example, the operational modes for the FCB dispensing machine may be exemplarily be termed "fill", "freeze", and "defrost". The "fill" operational mode may be an initial filling of the dispenser, for example after installation, cleaning, or significant maintenance/repair, this is characterized by the barrel/liquid side being empty or nearly empty and may also include the barrel operating from an initial temperature at or close to ambient. The "freeze" operational mode is the standard dispensing state, where the barrel is filled with frozen carbonated beverage, users operate the machine to dispense portions, and the system operates as described above to maintain beverage in the barrel between the cut in and cut out pressures. The "defrost" operational mode is the defrost cycle as described above, wherein the barrel is warmed from a freezing temperature to melt the beverage in the barrel to eliminate ice chunks in the beverage in preparation for refreezing of the beverage in a subsequent "freeze" operational mode.

With the current operational mode determined, the cut in and cut out values are set at 508 with reference to the pressure table 504, which optionally includes entries and pressure values for one or more overrun settings. The cut in and cut out values may exemplarily be taken directly from a look up table like the one above dependent upon the operational mode and the overrun setting, as is shown at 510 for the "freeze" operational mode. In another example, as represented by the "defrost" operational mode, at 512 the cut in and cut out values may be set to a fixed or predetermined stored amount (as in "set cut in pressure to 1") combined with a value "cut out" pulled from a lookup table. In a still further example, the cut in and cut out pressure values may be calculated, as represented by the "fill" operational mode at 514. In that example, the cut in and cut out pressures are calculated from a formula (e.g. pressure = 0.5 * pressure value from lookup table for associated overrun setting). It will be recognized that other formulas may be used in this example while remaining within the scope of the present disclosure. While three operational states have been exemplarily used to show the process whereby different sets of cut in and cut out pressures are used to control filling of the barrel during each operational state of the FCB dispensing machine. Fig. 5 further represents three different manners of arriving at the cut in and cut out pressure values, and it will be recognized that the scope of the present disclosure is not so limited, and any of these manners of arriving at the cut in and cut out pressure values may be used with any of the operational modes. Furthermore, the system may include other operational modes in addition to or alternative to those shown in Fig. 5.

After the cut in and cut out pressures are determined based upon the current operational mode of the FCB dispensing machine, the process continues to monitor the liquid side pressure and control filling of the barrel, if needed. At 516, the liquid side pressure is determined. Exemplarily, the liquid side pressure is obtained from pressure transducer 152 (Figs. 1 &2) and represents the pressure in the barrel 122 and pressure in the liquid side 132 of the expansion tank 134. At 518, the liquid side pressure determined at 516 is compared to the cut in and cut out pressure values set above with respect to 508-514. An operational instruction or control of the dispenser is initiated based upon this comparison. If the liquid side pressure is below the cut in value, then at 520 the water, syrup, and/or CO2 valves are opened to fill the barrel. If the liquid side pressure is at or above the cut out value, then at 522 the water, syrup, and/or CO2 valves are closed to stop filling the barrel. As the process described herein is exemplarily a continuous and iterative process, many determinations of liquid side pressure 516 will be the same or similar to the previous determination of liquid side pressure. Additionally, the set of cut in and cut out values represent a pressure range whereby the previous operational instruction is maintained. If the determined liquid side pressure is between the cut in value and the cut out value, then at 524 the dispenser is operated at the immediately previous state (open valves or closed valves). In this manner, once a fill operation is initiated, the fill operation proceeds until the cut out pressure is achieved (for the current operational mode), while once the valves close, stopping the fill, the valves are not reopened until the pressure falls below the cut in pressure (for the current operational mode).

The present inventors have identified that FCB dispensing machines presently known in the art are prone to several problems regarding the maintenance and adjustment of a target gas side pressure within the expansion tank 134. The value of the gas side pressure can be adjusted to deliver different beverage textures to align with different customer preferences as well as different carbonated beverage types. The gas side pressure controlled by a regulator 139. Typically, this regulator is a physical set regulator, which does not lend itself to simple adjustment or calibration via software, instead requiring replacement to a regulator at a different pressure. Additionally, the gas side pressure may not be accurate after a period of use due to inaccuracies in regulators, minor leaks, wear, or an improper configuration. Adjustment and calibration of the gas side 136 pressure is also affected by the liquid side 132 pressure. Because the diaphragm 138 changes the volume of the gas side 136 of the expansion tank based upon a current pressure in the liquid side 132, this can cause pressure offset and fluctuations in the measured gas side pressure. The improved control system 400 addresses these shortcomings by executing a process for monitoring, calibration, and adjustment of gas side pressure independent of the liquid side pressure.

As discussed above, with respect to Figs. 3 and 6A, the fill process is initiated based upon measurements of the liquid side pressure, which varies during the fill process and dispenses. There is a period of time after a dispense of the FCB product when the liquid side pressure drops prior to the initiation of the fill process. During this time, the liquid side pressure in the barrel 122 drops below the target gas side pressure in the expansion tank 134. The inventors developed an improved logic flow which performs gas side 136 adjustments and calibrations during this period of time, such that the gas side 136 pressure can be monitored, calibrated and/or adjusted without interference from the liquid side 132 pressure.

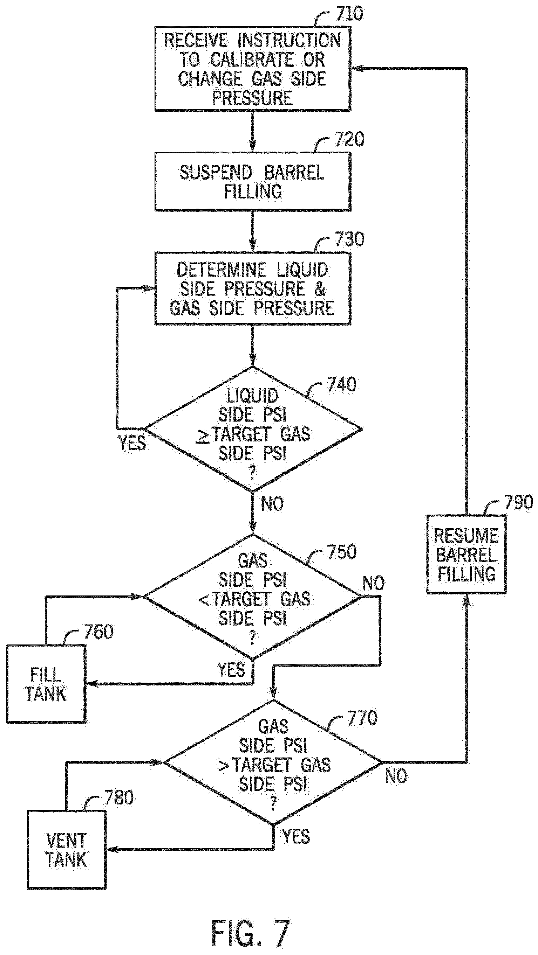

Figure 7 is a flow chart of an exemplary process 700 of adjusting gas side pressure of an expansion tank 134 in a FCB dispensing machine. Figures 6B and 6C provide graph 600 and valve state diagrams 602 that illustrate an examples of the process 700. It will be recognized that like reference numbers between Figs. 6A-6C represent like concepts (e.g. liquid side pressure) even through the values (e.g. psig gas pressure) may differ between the graphs of Figs. 6A-6C. The control system 400 receives an input or instruction at 710 to calibrate or adjust the gas side pressure of an expansion tank 134. Fig. 6B provides an example of a target gas side pressure (TGP) 620 greater than the current gas side pressure 604, requiring an increase in the gas side pressure. Fig. 6C provides an example of a target gas side pressure 620 lower than the current gas side pressure 604, requiring a decrease in gas side pressure. A calibration routine will be recognized as the target gas side pressure 620 remaining the same, but the measured gas side pressure 604 is found to be higher or lower than the target gas side pressure, requiring the associated increase or decrease. At 720, the control system 400 operates to suspend refill operations of the barrel 122 to deplete liquid from the barrel which will lower the liquid side pressure with subsequent dispenses and ensure that no additional pressure is added to the liquid side 132 of the expansion tank 134. Next, at 730, the liquid side pressure (608) of the liquid side 132 of the expansion tank 134 is determined, for example based upon inputs received from pressure transducer 152. The gas side pressure (604) of the gas side 136 of the expansion tank 134 is determined, for example from pressure transducer 119.

At 740, the control system 400 then compares the liquid side pressure 608 to a target gas side pressure (TGP) 620. In examples, the TGP may be an increase from the current gas side pressure, a decrease in the current gas side pressure, or in the case of a calibration routine, the same as the current gas side target pressure. At 740 the measured liquid side pressure 608 is compared to the TGP 620. If the liquid side pressure is greater than the TGP, the process cycles back to 730 to make a new measurement of the liquid side pressure. In 6C, the liquid side pressure 608 is initially above the TGP 620, but after the dispense valve 612 opens at 745 the liquid side pressure begins to drop. As noted above, with barrel refill operations suspended, dispense cycles of beverage from the barrel 122 will incrementally decrease the liquid side pressure. The comparison at 740 is passed when the liquid side pressure is less than the TGP.

Next, the measured gas side pressure 604 is used to inform any pressure adjustments that are needed to the gas side to achieve the TGP 620. At 750 the measured gas side pressure 604 is compared to the TGP 620. If the gas side pressure is less than the TGP, then at 760 a gas valve 123 is opened from a gas supply 121 to increase the gas pressure at the gas side 136 of the expansion tank until the gas side pressure is equal to the TGP. This is exemplarily shown in Fig. 6B, wherein a gas side pressure 604 below the TGP 620 results in opening of the gas tank fill valve 616, which may exemplarily be opening of gas tank fill valve 123. Because barrel refill operations are suspended, subsequent dispenses from the dispense valve 612 may lower the liquid side pressure below the liquid side cut in 610. This maintains until the gas side pressure 604 equals the TGP 620, when the method proceeds as described below and at 790 barrel filling resumes. With the liquid side pressure 608 now below the liquid cut in pressure 610, the product fill valves 614 are opened. Once the dispense valve 612 closes at 795, the liquid side pressure 608 begins to rise, stopping at the liquid side cut off pressure 606 by closing of the product fill valves 614.

Returning to 750, if at 750 the control system 400 determines that the measured gas side pressure 604 is not less than the TGP 620, as is shown in Fig. 6C, the process continues to 770 where the control system 400 determines if the measured gas side pressure 604 is greater than the TGP 620. If the gas side pressure 604 is greater than the TGP 620, then a vent valve 618 is opened at 780, which may exemplarily be opening of the vent valve 125. to release gas pressure from the gas side exemplarily to the atmosphere or to a relief tank until the measured gas side pressure 604 is equal to the TGP 620. As shown in Fig. 6C, when the gas side pressure 604 is no longer greater than the TGP 620, then the vent valve 618 is closed.

Lastly, with the measured gas side pressure 604 equal to the TGP 620 (or no longer greater than TGP), the control system 400 operates to resume barrel filling operations at 790 if the measured liquid side pressure drops below the cut in pressure value. While in Fig. 6B, the liquid side pressure 608 was already below liquid side cut in pressure 610 at 790 when barrel filling is resumed, so the product fill valves 614 were opened at that same time. However, in Fig. 6C, barrel filling no longer suspended at 790 while the liquid side pressure 608 is above the cut in pressure 610, and so the barrel is not refilled until the liquid side pressure 608 fall to the cut in pressure 610, at which time the product fill valves 614 are opened to fill the barrel. The liquid side pressure exemplarily begins to rise at 795 once the dispense valve 612 is closed. The product fill valves 614 close when the liquid side pressure 608 reaches the liquid cut off pressure 606. The method 700 returns to 710 awaiting a new input for adjustment of the gas side pressure. Fig. 6 provides an example of the gas side and liquid side pressures in connection with gas and liquid filling operations.

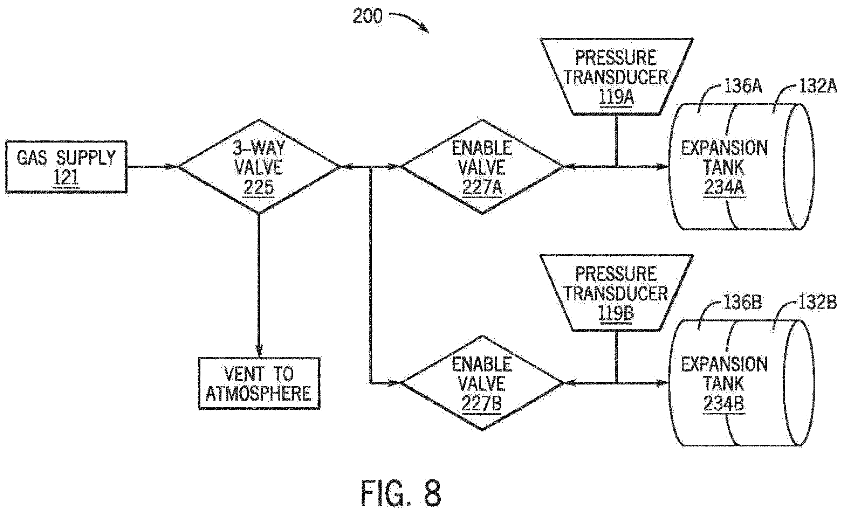

Fig. 8 shows an alternative expansion tank system 200 which provides a design economy to provide gas pressure control to multiple expansion tanks. In the system 200 a 3-way valve 225 is positioned between the gas supply 121, the vent 125 and connections to the expansion tanks 134A, 134B. Respective enable valves 227A, 227B are connected in-line between the 3-way valve 225 and the respective expansion tanks 134A, 134B. The 3-way valve is operated to alternatively connect gas supply 121 (to increase gas side pressure) and vent 125 (to decrease gas side pressure) to the expansion tanks 134A, 134B. Once so connected, control of a particular expansion tank 134A/134B receiving the gas or venting gas is made through the corresponding enable valve 227A, 227B. Pressure transducers 119A, 119B are located between the enable valve 227A, 227B and the respective expansion tank 134A, 134B.

In the above description, certain terms have been used for brevity, clarity, and understanding. No unnecessary limitations are to be inferred therefrom beyond the requirement of the prior art because such terms are used for descriptive purposes and are intended to be broadly construed. The different systems and method steps described herein may be used alone or in combination with other systems and methods. It is to be expected that various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A frozen beverage dispensing machine (100) comprising:
a barrel (122);
an expansion tank (134), the expansion tank having a gas side (136) separated from a liquid side (132) by a bladder (138), wherein the liquid side is fluidly connected to the barrel;
a gas pressure transducer (119) operably connected to the gas side of the expansion tank;
a liquid pressure transducer (152) operably connected to the liquid side of the expansion tank; and
a controller (400) configured to receive liquid pressure measurements from the liquid pressure transducer, the controller is configured to initiate a fill process to provide a flow of liquid through the liquid side of the expansion tank into the barrel in response to the liquid pressure measurements falling below a liquid cut in pressure value, and the controller is configured to initiate a gas pressure adjustment process when the liquid pressure measurements are less than a target gas side pressure.

2. The frozen beverage dispensing machine of claim 1, further comprising a valve (123) connected between the gas side of the expansion tank and a gas source, and in the gas pressure adjustment process if a gas pressure measured at the gas pressure transducer is less than the target gas side pressure, the valve is opened until the gas pressure measured at the gas pressure transducer equals the target gas side pressure.

3. The frozen beverage dispensing machine of claim 1 or 2, further comprising a vent valve (125) connected to the gas side of the expansion tank, and in the gas pressure adjustment process if a gas pressure measured at the gas pressure transducer is greater than the target gas side pressure, the vent valve is opened until the gas pressure measured at the gas pressure transducer equals the target gas side pressure.

4. The frozen beverage dispensing machine of any of claims 1-3, wherein the controller (400) is configured to execute the gas pressure adjustment process after the liquid pressure measurement falls below the target gas side pressure, wherein in the gas pressure adjustment process, the controller compares the gas pressure measurement to the target gas side pressure and operates to add or vent gas pressure from the gas side of the expansion tank until the gas pressure measurement equals the target gas side pressure.

5. The frozen beverage dispensing machine of claim 4, wherein the gas pressure adjustment process is a calibration routine and the target gas side pressure is the same as a previous target gas side pressure.

6. The frozen beverage dispensing machine of claim 4, wherein controller is configured to execute the gas pressure adjustment process after the liquid pressure measurements fall below the target gas side pressure by a predetermined amount.

7. The frozen beverage dispensing machine of any of claims 1-6, wherein the controller is configured to receive a user input of the target gas side pressure, and the controller further delays initiation of the gas pressure adjustment process until after the liquid pressure measurements fall below the target gas side pressure.

8. The frozen beverage dispensing machine of claim 7, wherein in response to receiving the user input of the target gas side pressure, the controller operates to suspend the fill process until the gas pressure adjustment process is completed.

9. The frozen beverage dispensing machine of any of claims 1-8, wherein the target gas side pressure is a target gas side pressure range.

10. The frozen beverage dispensing machine of any of claims 1-9, wherein the controller is configured to determine an operational mode of the frozen beverage machine and based upon the determined operational mode, determine the liquid cut in pressure and a liquid cut out pressure.

11. The frozen beverage dispensing machine of claim 10, wherein the liquid cut in pressure and the liquid cut out pressure are lower values if the operational mode is a defrost mode than if the operational mode is a freeze mode.

12. A method of filling a frozen beverage dispensing machine according to any of claims 1-11, the method of filling comprising:
measuring a gas pressure at a gas side of an expansion tank;
measuring a liquid pressure at a liquid side of the expansion tank, wherein the gas side of the expansion tank is separated from the liquid side of the expansion tank by a bladder;
comparing, with a controller, the measured liquid pressure to a target gas side pressure; and
initiating a gas pressure adjustment process when the liquid pressure measurements are less than a target gas side pressure.

13. The method of frozen beverage machine filling of claim 12, comprising:
receiving the target gas side pressure;
suspending barrel filling operations until the gas pressure adjustment process is complete; and optionally:
opening a valve (123) connected between the gas side of the expansion tank and a gas source if the gas pressure measured at the gas side of the expansion tank is less than the target gas side pressure; and
opening a vent valve (125) connected to the gas side of the expansion tank if the gas pressure measured at the gas side of the expansion tank is greater than the target gas side pressure.

14. A method of filling a frozen beverage dispensing machine according to any of clims 1-11, the method of filling comprising:
determining an operational mode of the frozen beverage machine;
based upon the operational mode, determining a cut in pressure and a cut out pressure;
measuring a liquid pressure within the frozen beverage machine;
comparing the liquid pressure to the cut in pressure and the cut out pressure; and
determining an action of the frozen beverage machine based upon the comparison.

15. The method of claim 14, further comprising:
opening at least one valve (124, 128, 129) to fill a barrel (122) of the frozen beverage machine if the liquid pressure is below the cut in value;
closing at least one valve (124, 128, 129) to stop filling of the barrel of the frozen beverage machine if the liquid pressure is above the cut out value; and
maintaining a current valve operation if the liquid pressure is between the cut in value and the cut out value; and optionally:
wherein determining the cut in pressure and the cut out pressure comprises obtaining the cut in pressure and/or the cut out pressure from a look up table and/or calculating the cut in pressure and/or the cut out pressure; and
receiving an overrun value;
referencing a lookup table of overrun values, cut in pressure values and cut out pressure values; and
selecting a cut in pressure value and a cut out pressure value based upon the determined operational mode and the overrun value.
